(19) Europäisches Patentamt / European Patent Office / Office européen des brevets

(11) **EP 4 309 892 A1**

(12) **EUROPEAN PATENT APPLICATION**
published in accordance with Art. 153(4) EPC

(43) Date of publication:
**24.01.2024 Bulletin 2024/04**

(21) Application number: **22771151.2**

(22) Date of filing: **04.03.2022**

(51) International Patent Classification (IPC):
**B32B 27/00** (2006.01)   **B32B 27/20** (2006.01)
**B32B 27/32** (2006.01)   **B65D 65/40** (2006.01)

(52) Cooperative Patent Classification (CPC):
**B32B 27/00; B32B 27/20; B32B 27/32; B65D 65/40**

(86) International application number:
**PCT/JP2022/009486**

(87) International publication number:
**WO 2022/196397 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2021   JP 2021044013**

(71) Applicant: **TOYOBO CO., LTD.**
**Osaka-shi, Osaka 530-0001 (JP)**

(72) Inventors:
• **ISHIMARU, Shintaro**
  **Tsuruga-shi, Fukui 914-8550 (JP)**
• **HARUTA, Masayuki**
  **Tsuruga-shi, Fukui 914-8550 (JP)**

(74) Representative: **Müller-Boré & Partner**
**Patentanwälte PartG mbB**
**Friedenheimer Brücke 21**
**80639 München (DE)**

(54) **LASER-PRINTED LAMINATE DISPLAY BODY**

(57)   An object of the present invention is to provide a laser-printable laminate display body in which printing is not peeled off even when an external stimulus such as rubbing is applied, and to provide a laminate display body which can afford high-quality laser printing such that characters can be clearly visually recognized by high density and fineness of printing and does not cause defects such as perforation due to laser printing. A laminate display body including at least one printing layer that can undergo printing by laser irradiation, in which the laser printing layer includes a laser-printed portion printed by laser and a non-printed portion, at least one laser non-absorbing layer is laminated on the printing layer, and the absolute value of the difference in color L* value between the laser-printed portion and the non-printed portion is 1.0 or more and 10.0 or less.

EP 4 309 892 A1

**Description**

TECHNICAL FIELD

The present invention relates to a laminate display body printed by irradiating a laser-printable laminated body with laser light.

BACKGROUND ART

Conventionally, packaging has been used for distribution goods typified by foods, medicines and industrial products. For the most part, such packaging not only protect the contents but also have the role of displaying (hereinafter sometimes referred to as "printing") information pertaining to the product name, production date, raw materials, and so forth. As a means for such display, for example, as described in Patent Document 1, labels (tack labels) have been widely used in which an adhesive is applied to the back surface of substrates printable by ink, thermal transfer, and the like. Tack labels are attached to the release paper (backing paper) with information printed on the front surface, which is the display surface, in advance, and is peeled off from the backing paper and attached to the packaging at the time of use. The backing paper after the tack label is attached thereto is used up, so the amount of waste increases as much as the label is used. In addition, the user of label is required to have a label with different display contents according to the type of contents, label management becomes more complicated as the types of contents increase, and there is a risk of incorrect labeling. Furthermore, it is usually required to prepare extra inventory for label shortages, and the labels are discarded when the manufacture and sale of the contents is completed since there is no use for the labels. As described above, tack labels have various problems.

In order to solve the problems, for example, Patent Document 2 discloses a thermal film having a thermal recording layer. The film of Patent Document 2 is discolored by heat and itself has display performance, and use of tack labels is not required. In addition, use of films such as that of Patent Document 2 contributes to labor saving and cost reduction since bag making and displaying are completed in one process by incorporating a printing machine such as a thermal printer into the bag making process of packaging. Since there are these advantages, a technique of performing printing directly on the film itself, which serves as a packaging, has recently become widespread. However, when the thermal layer is provided on the substrate film, there is a concern that the thermal layer may come off by rubbing against the outside, and the like, and usually a protective layer is provided on the thermal layer (outermost layer). Coating is widely used as a means for providing functional layers including these protective layers. However, as coating is necessary to undergo at least the processes of application, drying, and winding, the number of processes increases by the number of functional layers, and this leads to a decrease in productivity. Furthermore, these functional layers often contain particles, and in this case, there is also a problem that the transparency decreases as the layer thickness increases. Furthermore, neither the printing technique using ink such as the tack labels nor the printing technique using heat such as thermal labels can reach the resolving power (about 0.2 mm) by human visual recognition because of bleeding when it is tried to reduce the printing size. Since packaging for drugs and the like include a large amount of necessary information, there has been a demand to reduce the printing size, but the conventional techniques described above cannot meet the demand.

Meanwhile, in addition to the ink and heat mentioned above, display techniques using lasers as triggers have recently become widespread. For example, Patent Document 3 discloses a multilayer laminated film for laser printing. The print layer of this laminated body contains titanium oxide as a laser-printable component. The object of the film of Patent Document 3 is to obtain a clear laser image with thick lines by spreading and diffusing a carbonized ink composition, and a clear laser image with thin lines cannot be obtained. For example, pharmaceutical packaging is required to display a large amount of information according to laws and regulations, but the size of the packaging itself is small since the amount of contents is small. Therefore, in order to display a large amount of information on a small packaging, the characters are required to be decreased in size, and there is a problem that the visual perceptibility is extremely diminished when the printed lines are thick.

As a technique capable of solving such problems, for example, Patent Document 4 discloses a laser marking additive containing bismuth oxide. By kneading this additive into the plastic, the portion irradiated with laser light is discolored, and printing can be performed. Usually, single plastics do not respond to laser light, but this additive is excited by the energy of laser light, scorches the plastic, and further itself is discolored, whereby printing is possible. Since the additive exists inside the film, this technique can solve the problem of peeling off of the functional layers in the coating. Furthermore, in the case of using laser, printing is less likely to bleed, so it is possible to reduce the size of characters below the human resolving power. However, in such a film having a laser printing function, it is still required to increase the output of laser in order to obtain printing that is easily visually recognized. Especially in the case of characters with intersections such as "8", depending on the font, the character may be irradiated with laser light two times, and this may cause more damage to the film. In other words, there is a problem that excessive laser energy causes heat shrinkage of the film or formation of holes.

PRIOR ART DOCUMENT

PATENT DOCUMENTS

Patent Document 1: JP-A-2002-362027
Patent Document 2: JP-A-2017-209847
Patent Document 3: JP-A-2014-104735
Patent Document 4: WO 2014/188828

SUMMARY OF THE INVENTION

PROBLEMS TO BE SOLVED BY THE INVENTION

It is an object of the present invention to solve problems of the conventional art such as the foregoing. In other words, an object of the present invention is to provide a laser-printable laminate display body in which printing is not peeled off even when external stimuli such as rubbing is applied, and to provide a laminate display body which can afford high-quality laser printing such that characters can be clearly visually recognized by high density and fineness of printing and does not cause defects such as perforation due to laser printing.

MEANS FOR SOLVING THE PROBLEMS

The present invention is constituted as follows.

1. A laminate display body comprising at least one printing layer that can undergo printing by laser irradiation, wherein the laser printing layer includes a laser-printed portion printed by laser and a non-printed portion, at least one laser non-absorbing layer is laminated on the printing layer, and an absolute value of a difference in color L* value between the laser-printed portion and the non-printed portion is 1.0 or more and 10.0 or less.
2. The laminate display body according to 1, wherein the printing layer contains single substances or compounds of one or more selected from the group consisting of bismuth, gadolinium, neodymium, titanium, antimony, tin, aluminum, calcium, and barium as a laser printing pigment.
3. The laminate display body according to 1 or 2, wherein the printing layer contains at least one of titanium oxide or calcium carbonate as a laser printing pigment.
4. The laminate display body according to any one of 1 to 3, wherein the laser non-absorbing layer is a sealing layer.
5. The laminate display body according to any one of 1 to 4, wherein a substrate layer is laminated as the laser non-absorbing layer.
6. The laminate display body according to any one of 1 to 5, wherein a gas barrier layer is further laminated.
7. The laminate display body according to any one of 1 to 6, wherein a thickness is 5 um or more and 200 um or less.
8. The laminate display body according to any one of 1 to 7, wherein a resin making up the printing layer is mainly any of polyester, polypropylene, or polyethylene.
9. The laminate display body according to any one of 1 to 8, wherein either a height or a width of printing size in the printed portion is 0.2 mm or more and 100 mm or less.
10. A packaging comprising the laminate display body according to any one of said 1 to 9 at least at a part.

EFFECT OF THE INVENTION

According to the present invention, it is possible to provide a laminate display body which does not cause printing peeling off due to external stimuli such as rubbing, can afford clear laser printing, and does not cause defects due to laser printing.

MODE FOR CARRYING OUT THE INVENTION

Hereinafter, the laminate display body of the present invention will be described.

1. Configuration of laminate display body

1.1. Layer configuration and thickness

It is required that the laminate display body of the present invention include at least one printing layer printable by laser irradiation and at least one laser non-absorbing layer be laminated on the printing layer. Layers other than the printing layer and the laser non-absorbing layer may be laminated in the laminate display body of the present invention. The laminate display body of the present invention may be provided with a print layer on which characters and patterns (other than the printing formed by laser) are described in order to improve the design as a packaging. Necessary or preferred requirements for these layers will be described later.

As a preferred configuration of the present invention, the following configuration can be exemplified from the outermost layer when used as a packaging. The laser non-absorbing layer in the following configuration is a layer that does not contain the laser pigment described in "1.2.1. Types of laser printing pigments, amounts thereof added, and methods for adding same" (described later).

Printing layer/print layer/adhesive layer/sealing layer
Substrate layer/print layer/substrate layer/adhesive layer/printing layer/adhesive layer/sealing layer
Substrate layer/print layer/transparent gas barrier layer/adhesive layer/printing layer/adhesive layer/sealing layer
Substrate layer/adhesive layer/printing layer/opaque gas barrier layer (metal foil)/adhesive layer/sealing layer

The laminate display body of the present invention may be further provided with an anchor coat layer laminated on the substrate layer or sealing layer and an overcoat layer laminated on the gas barrier layer, if necessary. By providing these layers, the gas barrier properties and scratch resistance of the laminate display body can be improved.

The thickness of the laminate display body is not particularly limited, but is preferably 5 um or more and 200 um or less. It is not preferred that the thickness of the laminate display body is thinner than 5 um since the printing density may be insufficient, the heat sealing strength may be insufficient, print processing may become difficult, and the like. The thickness of the laminated body may be thicker than 200 $\mu$m, but this is not preferred since the weight of the laminate display body used increases and the cost increases. The thickness of the laminate display body is more preferably 5 um or more and 160 um or less, still more preferably 7 um or more and 120 um or less.

The thickness of the printing layer that makes up the laminate display body of the present invention is preferably 3 um or more and 190 um or less. When the thickness is less than 3 $\mu$m, the visual perceptibility of laser printing may be diminished even when the concentration of the laser printing pigment described later is increased. When the thickness of the printing layer exceeds 190 um, the volume of the film that absorbs laser light is extremely large, this may cause great damage, and deformation or perforation of the laminate display body may occur. The thickness of the printing layer is more preferably 10 um or more and 180 um or less, still more preferably 15 um or more and 170 um or less.

In order to improve the printability and lubricity of the film surface, the outermost layer (inner side, outer side) of the laminate display body of the present invention can also be provided with layers subjected to corona treatment, coating treatment, flame treatment and the like, and these layers can be provided arbitrarily within the scope of the requirements of the present invention.

1.2. Printing layer

1.2.1. Types of laser printing pigments, amounts thereof added, and methods for adding same

So that a printing layer making up the present invention may be made laser-printable, laser printing pigment having functionality permitting change in color when acted on by laser irradiation must be added thereto. Since it is ordinarily the case that the plastic that makes up the laminate display body will itself have almost no reaction to laser light, it is incapable of permitting printing by means of laser irradiation. Laser printing pigment can be made to undergo excitation by the energy from laser light, making it possible for printing to take place as a result of carburization of the surrounding plastic. Furthermore, besides the plastic carburization effect, there are laser printing pigments which, depending on the type thereof, may themselves change color and become black. Simple or complex action of this carburization effect and/or laser printing pigment color change effect makes it possible for printing to be carried out at the printing layer. From the standpoint of printing density, it is preferred that laser printing pigment(s) having both the plastic carburization effect and the effect whereby it itself changes color be selected. Furthermore, it is more preferred that a laser printing pigment itself having concealing properties be selected.

As specific types of laser printing pigments, any of bismuth, gadolinium, neodymium, titanium, antimony, tin, aluminum, calcium, and barium-whether present alone or in oxide form-may be cited. Among these, titanium oxide, calcium carbonate, bismuth trioxide, antimony trioxide, and barium sulfate are preferred, and titanium oxide, calcium carbonate and bismuth trioxide are more preferred. Furthermore, it is preferred that laser printing pigment particle diameter be 0.1 um or more and 10 um or less. When laser printing pigment particle diameter is less than 0.1 um, there is a possibility that change in color when irradiated by a laser will no longer be adequate. When the particle size of the laser printing pigment exceeds 10 $\mu$m, there is a concern that clogging of the filter is accelerated in the extrusion process when a film is formed. It is more preferred that laser printing pigment particle diameter be 1 um or more and 9 um or less, and still more preferred that this be 2 um or more and 8 um or less.

The amount of the laser printing pigment added to the printing layer is preferably 5% by mass or more and 50% by mass or less. When the amount of pigment added is less than 5% by mass, this is not preferred since the printing density by laser will no longer be adequate. When the amount of pigment added exceeds 50% by mass, the amount (volume) of carbonized plastic is relatively decreased, and this may also result in insufficient printing density. The amount of the laser printing pigment added is more preferably 7% by mass or more and 48% by mass or less, still more preferably 9% by mass or more and 46% by mass or less.

As the method for blending the laser printing pigment, the laser printing pigment can be added at any stage during the manufacture of the resin or film serving as a raw material of the laminate display body. For example, with regard to step(s) during manufacture of resin(s), methods in which a vented kneader extruder is used to cause plastic raw material and a slurry in which particles thereof are dispersed in solvent to be blended, methods in which a kneader extruder is used to cause dried particles thereof and plastic resin to be blended (made into masterbatch), and so forth may also be cited. Among these, methods in which masterbatch that contains laser printing pigment is used as film raw material are preferred. As will be described later, the printing layer is preferably uniaxially stretched or biaxially stretched, more preferably biaxially stretched. By stretching the printing layer, abrasion resistance can be imparted and mechanical strength can be exerted.

### 1.2.2. Types of plastic

The type of plastic that makes up the printing layer in the present invention is not particularly limited, and any type of plastic can be freely used without departing from the gist of the present invention. As the type of plastic, polyester, polyolefin, polyamide, and the like may be cited as examples.

As polyester, polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), polybutylene succinate (PBS), and so forth may be cited as examples. Moreover, in addition to the polyesters cited at the foregoing examples, it is also possible to use modified polyesters in which the monomer(s) at such acid site and/or diol site are altered. As acid-site monomer, isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids may be cited as examples. Furthermore, as diol-site monomer, neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, bisphenol A and other such aromatic-type diols, and so forth may be cited as examples. Moreover, as component making up polyester, this may include polyester elastomer(s) comprising $\varepsilon$-caprolactone, tetramethylene glycol, and/or the like. Regarding the polyester raw materials cited above, it is possible to use raw material in which a plurality of types of homopolyester, each of which has polymerized therein one types of carboxylic acid monomer and one types of diol monomer, are mixed (dry blended); and it is possible to use raw material in which two or more types of carboxylic acid monomer and/or two or more types of diol monomer are copolymerized. Furthermore, it is possible to use raw material in which homopolyester(s) and copolymerized polyester(s) are mixed.

While there is no particular limitation with respect to the intrinsic viscosity (IV) of polyester serving as raw material, it being possible for this be freely chosen as desired, it is preferred that this be 0.5 dL/g to 1.2 dL/g. When IV is less than 0.5 dL/g, since this causes molecular weight of the raw material to be too low, this will increase the tendency for fracture to occur during film formation, and increases the tendency for tensile fracture strength of the display body to fall below 40 MPa, and for other such problems to occur. On the other hand, when IV exceeds 1.2 dL/g, this is not preferred, since it will cause the resin pressure at the time of extruding operation(s) during film formation to be too high, which would tend to cause occurrence of deformation of filter(s) and so forth. It is more preferred that IV be 0.55 dL/g or more and 1.15 dL/g or less, and still more preferred that this be 0.6 dL/g or more and 1.1 dL/g or less.

As polyolefin, polypropylene (PP), polyethylene (PE), and so forth may be cited as examples. Where polypropylene is employed, there is no particular limitation with respect to stereoregularity, it being possible for this to be isotactic, syndiotactic, and/or atactic, it being possible for these to be present therein in any desired fractional percentage(s). Furthermore, where polyethylene is employed, there is no particular limitation with respect to the density (degree of branching) thereof, it being possible for this to be high density (HDPE), linear low density (LLDPE), and/or low density (LDPE). Furthermore, besides the foregoing homopolymers, raw materials in which two or more different types of monomers are copolymerized may be used; examples of monomers that may be used for copolymerization which may be cited including ethylene, α-olefins, and so forth; examples of α-olefins which may be cited including propylene, 1-butene, 1-pentene, 1-hexene, 1-heptene, 1-octene, 1-nonene, 1-decene, 4-methyl-1-pentene, 4-methyl-1-hexene, and so forth. The form of copolymerization may be random copolymerization and/or block copolymerization. Moreover, besides the examples of raw materials cited above, polyolefin elastomer and/or ionomer may be employed.

While there is no particular limitation with respect to the melt flow rate (MFR) of polyolefin serving as raw material, it being possible for this be freely chosen as desired, it is preferred that this be 1 g/10 min to 10 g/10 min. When MFR is less than 1 g/10 min, this is not preferred since it would cause the melt viscosity of the raw material to be too high, as a result of which the resin pressure at the time of extruding operation(s) during film formation would be too high, which would tend to cause occurrence of deformation of filter(s) and so forth. On the other hand, when MFR exceeds 10 g/10 min, since this would cause molecular weight to become extremely low, there is a possibility that it would increase the tendency for fracture to occur during film formation, and/or that it would reduce resistance to blocking. It is more preferred that MFR be 2 g/10 min or more and 8 g/10 min, and still more preferred that this be 3 g/10 min or more and 7 g/10 min.

As polyamide, any one type of resin-or a raw material mixture in which two or more types thereof are mixed-selected from among polycaproamide (nylon 6), polyhexamethylene adipamide (nylon 66), caprolactam/lauryl lactam copolymer (nylon 6/12), caprolactam/hexamethylene diammonium adipate copolymer (nylon 6/66), ethylene ammonium adipate/hexamethylene diammonium adipate/hexamethylene diammonium sebacate copolymer (nylon 6/66/610), polymers of meta-xylylenediamine and adipic acid (MXD-6), hexamethylene isophthalamide/terephthalamide copolymer (amorphous nylon), and so forth may be cited as examples. Furthermore, an adhesion improvement layer may be provided at the surface of a film comprising any of the examples of plastics cited above. As material for the adhesion improvement layer, acrylic, a water-soluble or water-dispersible polyester, a hydrophobic polyester in which acrylic is graft copolymerized, and so forth may be cited as examples.

It is preferred that the relative viscosity (RV) of polyamide serving as raw material be 2.2 or more and 4 or less. When RV is less than 2.2, crystallization rate may be too high, and there may be a tendency for fracture or the like to occur when stretching is carried out during film forming operations. On the other hand, when RV exceeds 4, this is not preferred, as the load on the extruder will be too high, and there will be increased tendency for occurrence of filter deformation and the like. It is more preferred that RV be 2.3 or more and 3.9 or less, and still more preferred that this be 2.4 or more and 3.8 or less. The "relative viscosity" in the context of the present invention means the value measured at 25°C using a solution in which 0.5 g of polymer has been dissolved in 50 ml of 97.5% sulfuric acid.

As the type of plastic that makes up the laser printing layer, polyester, polypropylene, and polyethylene are preferred among those cited above, in particular, polyester and polypropylene are more preferred.

1.2.3. Additives other than laser printing pigment

Into the printing layer making up the laminate display body of the present invention, various additives, for example, waxes, antioxidants, anti-static agents, crystal nucleating agents, viscosity-lowering agents, thermal stabilizers, colorant pigments, antistaining agents, and ultraviolet light absorbers can be added, if necessary. In a case where the printing layer is the outermost layer, it is preferable to add microparticles serving as a lubricant for improving lubricity thereto. Any desired microparticles may be chosen. For example, as inorganic-type microparticles, silica, alumina, kaolin, white lead, titanium white, zeolite, zinc oxide, lithopone, and so forth may be cited; as organic-type microparticles, acrylic particles, melamine particles, silicone particles, crosslinked polystyrene particles, carbon black, iron oxide, and so forth may be cited. Average particle diameter of microparticles when measured by means of a Coulter counter may be chosen as appropriate as needed within the range 0.05 um to 3.0 um. The lower limit of the percentage content of microparticles is preferably 0.01% by mass, more preferably 0.015% by mass, still more preferably 0.02% by mass. Below 0.01% by mass, there may be reduction in lubricity. The upper limit is preferably 1% by mass, more preferably 0.2% by mass, still more preferably 0.1% by mass. It is not preferred that the upper limit exceeds 1% by mass since the transparency may deteriorate.

As the method for blending particles into the laser printing layer, the particles may be added at any stage during the manufacture of plastic raw material, and it is possible to adopt a method that is the same as that in the "1.2.1. Types of laser printing pigments, amounts thereof added, and methods for adding same".

1.3. Laser non-absorbing layer

The laser non-absorbing layer making up the laminate display body of the present invention is a layer that is not printed even when irradiated with laser light. As described above, the printing layer absorbs laser energy to achieve printing. When the printing layer absorbs laser energy, heat is generated, causing thermal damage to the corresponding site. When the laser energy is increased to improve the printing density, the laser-irradiated portion of the laminate display body may be thermally shrunk due to this thermal damage, and further, there is a concern that perforation may occur. When the laminate display body undergoes heat shrinkage or perforation, the appearance of the packaging, which is the final product, is extremely deteriorated as well as problems such as a decrease in gas barrier properties arise in the case of a laminate display body having gas barrier properties. In order to solve this problem, the laminate display body of the present invention is required to be provided with a laser non-absorbing layer in addition to the printing layer. The laser non-absorbing layer does not absorb laser light and thus does not undergo thermal damage. In other words, as the laser non-absorbing layer is laminated on the printing layer, the laser non-absorbing layer functions to cover thermal shrinkage and perforation due to thermal damage to the printing layer.

The laser non-absorbing layer is preferably a layer that also has a function other than covering thermal damage caused by laser light, and examples thereof include a sealing layer and a substrate layer. Since a packaging is usually completed by being sealed by heat sealing, it is more preferred that the laser non-absorbing layer be a sealing layer. In order to strengthen the reduction of thermal damage to the laminate display body and further improve the mechanical strength of the laminate display body, it is still more preferable to include two layers, a sealing layer and a substrate layer, as the laser non-absorbing layer.

Preferred requirements for the sealing layer and substrate layer as the laser non-absorbing layer will be described below.

1.3.1. Sealing layer

The sealing layer that makes up the laminate display body of the present invention is not particularly limited as long as it exhibits adhesive properties, and conventionally known ones can be arbitrarily used without departing from the gist of the present invention. Examples thereof include a heat sealing layer that exerts adhesive properties by heat and a pressure sensitive adhesive (tacky) layer that exhibits adhesive properties at room temperature.

As the type of plastic that makes up the heat sealing layer, polyester, polyolefin, polyamide, and the like may be cited as examples.

As polyester, polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), polybutylene succinate (PBS), and so forth may be cited as examples. Moreover, in addition to the polyesters cited at the foregoing examples, it is also possible to use modified polyesters in which the monomer(s) at such acid site and/or diol site are altered. As acid-site monomer, isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids may be cited as examples. Furthermore, as diol-site monomer, neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, bisphenol A and other such aromatic-type diols, and so forth may be cited as examples. Moreover, as component making up polyester, this may include polyester elastomer(s) comprising ε-caprolactone, tetramethylene glycol, and/or the like. Regarding the polyester raw materials cited above, it is possible to use raw material in which a plurality of types of homopolyester, each of which has polymerized therein one types of carboxylic acid monomer and one types of diol monomer, are mixed (dry blended); and it is possible to use raw material in which two or more types of carboxylic acid monomer and/or two or more types of diol monomer are copolymerized. Furthermore, it is possible to use raw material in which homopolyester(s) and copolymerized polyester(s) are mixed.

As polyolefin, polypropylene (PP), polyethylene (PE), and so forth may be cited as examples. Where polypropylene is employed, there is no particular limitation with respect to stereoregularity, it being possible for this to be isotactic, syndiotactic, and/or atactic, it being possible for these to be present therein in any desired fractional percentage(s). Furthermore, where polyethylene is employed, there is no particular limitation with respect to the density (degree of branching) thereof, it being possible for this to be high density (HDPE), linear low density (LLDPE), and/or low density (LDPE). Furthermore, besides the foregoing homopolymers, raw materials in which two or more different types of monomers are copolymerized may be used; examples of monomers that may be used for copolymerization which may be cited including ethylene, α-olefins, and so forth; examples of α-olefins which may be cited including propylene, 1-butene, 1-pentene, 1-hexene, 1-heptene, 1-octene, 1-nonene, 1-decene, 4-methyl-1-pentene, 4-methyl-1-hexene, and so forth. The form of copolymerization may be random copolymerization and/or block copolymerization. Moreover, besides the examples of raw materials cited above, polyolefin elastomer and/or ionomer may be employed.

While there is no particular limitation with respect to the melt flow rate (MFR) of polyolefin serving as raw material, it being possible for this be freely chosen as desired, it is preferred that this be 1 g/10 min to 10 g/10 min. When MFR is less than 1 g/1 min, this is not preferred since it would cause the melt viscosity of the raw material to be too high, as a result of which the resin pressure at the time of extruding operation(s) during film formation would be too high, which would tend to cause occurrence of deformation of filter(s) and so forth. On the other hand, when MFR exceeds 10 g/10 min, since this would cause molecular weight to become extremely low, there is a possibility that it would increase the tendency for fracture to occur during film formation, and/or that it would reduce resistance to blocking. It is more preferred that MFR be 2 g/10 min or more and 8 g/10 min, and still more preferred that this be 3 g/10 min or more and 7 g/10 min.

As polyamide, any one type of resin-or a raw material mixture in which two or more types thereof are mixed-selected from among polycaproamide (nylon 6), polyhexamethylene adipamide (nylon 66), caprolactam/lauryl lactam copolymer (nylon 6/12), caprolactam/hexamethylene diammonium adipate copolymer (nylon 6/66), ethylene ammonium adipate/hexamethylene diammonium adipate/hexamethylene diammonium sebacate copolymer (nylon 6/66/610), polymers of meta-xylylenediamine and adipic acid (MXD-6), hexamethylene isophthalamide/terephthalamide copolymer (amorphous nylon), and so forth may be cited as examples. Furthermore, an adhesion improvement layer may be provided at the surface of a film comprising any of the examples of plastics cited above. As material for the adhesion improvement layer, acrylic, a water-soluble or water-dispersible polyester, a hydrophobic polyester in which acrylic is graft copolymerized, and so forth may be cited as examples.

It is preferred that the lower limit of the range in values for relative viscosity (RV) of polyamide serving as raw material be 2.2, and more preferred that this be 2.3. When the foregoing is less than this, crystallization rate may be too high and biaxial stretching may be difficult. On the other hand, it is preferred that the upper limit of the range in values for the RV of polyamide be 4, and more preferred that this be 3.9. When the foregoing is exceeded, there is a possibility that the load or the like on the extruder will become too high and/or that productivity will decrease. The "relative viscosity" in the context of the present invention means the value measured at 25°C using a solution in which 0.5 g of polymer has been dissolved in 50 ml of 97.5% sulfuric acid.

As the type of plastic that makes up the pressure sensitive adhesive layer, polyester, polyolefin, polystyrene, acryl, and the like may be cited as examples, those having a glass transition temperature Tg which is below room temperature (in the vicinity of 25°C) being particularly preferred.

As examples of polyester, as monomer(s) that will permit Tg to be lowered, it is preferred that saturated carboxyl acid component and/or saturated diol component be used. As saturated carboxyl acid, adipic acid, azelaic acid, sebacic acid, decanedicarboxylic acid, 1,4-cyclohexanedicarboxylic acid, and so forth may be cited. Among these, adipic acid and azelaic acid are preferred. As saturated diol component, ethylene glycol, diethylene glycol, 1,3-propanediol, 2,2-diethyl-1,3-propanediol, 1,4-butanediol, and other such long-chain diols, and hexanediol and other such aliphatic diols may be cited. Among these, use of diethylene glycol, 1,3-propanediol, and/or 1,4-butanediol is preferred. Moreover, as component making up polyester-type resin, polyester elastomer(s) comprising ε-caprolactone, tetramethylene glycol, and/or the like may be used. Polyester elastomer may be favorably used since it is effective in lowering Tg.

As polyolefin-based substances, polyolefin-based elastomers may be cited as examples. As polyolefin-based elastomers, ethylene-propylene copolymer, ethylene-1-butene copolymer, ethylene-1-hexene copolymer, ethylene-1-octene copolymer, ethylene-4-methyl-1-pentene copolymer, ethylene-propylene-1-butene copolymer, ethylene-propylene-1-hexene copolymer, ethylene-1-butene-1-hexene copolymer, propylene-1-butene copolymer, propylene-1-hexene copolymer, propylene-1-octene copolymer, propylene-4-methyl-1-pentene copolymer, propylene-1-butene-1-hexene copolymer, propylene-1-butene-4-methyl-1-pentene copolymer, and so forth may be cited as examples. Furthermore, small amount(s) of SBS, SEBS, and/or other such styrenic elastomer(s) may be added thereto.

As polystyrenes, polystyrenic elastomers may be cited as examples. As polystyrenic elastomers, polymers in which an aromatic alkenyl compound and a conjugated diene have been block copolymerized may be cited as examples; examples of aromatic alkenyl compounds which may be cited including styrene, tert-butylstyrene, α-methylstyrene, p-methylstyrene, p-ethylstyrene, divinylbenzene, 1,1-diphenylethylene, vinylnaphthalene, vinylanthracene, N,N-dimethyl-p-aminoethylstyrene, N,N-diethyl-p-aminoethylstyrene, vinylpyridine, and so forth; examples of conjugated diene monomers which may be cited including 1,3-butadiene, 1,2-butadiene, isoprene, 2,3-dimethyl-butadiene, 1,3-pentadiene, 2-methyl-1,3-butadiene, 2-methyl-1,3-pentadiene, 1,3-hexadiene, 1,3-cyclohexadiene, 4,5-diethyl-1,3-octadiene, 3-butyl-1,3-octadiene, myrcene, chloroprene, and other such diolefins.

Acryl may be a copolymer of acrylic monomer or a copolymer of acrylic monomer and a monomer other than that which is capable of being copolymerized. As acrylic monomer, such copolymer may be derived from monomers, examples of which that may be cited including (meth)acrylic acid, methyl (meth)acrylate, ethyl (meth)acrylate, propyl (meth)acrylate, isopropyl acrylate, n-butyl (meth)acrylate, isobutyl acrylate, t-butyl (meth)acrylate, n-amyl (meth)acrylate, isoamyl (meth)acrylate, n-hexyl (meth)acrylate, 2-ethylhexyl (meth)acrylate, n-octyl (meth)acrylate, decyl (meth)acrylate, octadecyl (meth)acrylate, lauryl (meth)acrylate, stearyl (meth)acrylate, and other such (meth)acrylic acid alkyl esters; cyclohexyl (meth)acrylate, benzyl (meth)acrylate, phenyl (meth)acrylate, and other such (meth)acrylic acid cyclic esters; allyl (meth)acrylate, 1-methylallyl (meth)acrylate, 2-methylallyl (meth)acrylate, and other such vinyl (meth)acrylates and other such unsaturated-group-containing (meth)acrylic acid esters; glycidyl (meth)acrylate, (3,4-epoxycyclohexyl)methyl (meth)acrylate, and other such heterocycle-containing (meth)acrylic acid esters; N-methylaminoethyl (meth)acrylate, N-tributylaminoethyl (meth)acrylate, N,N-dimethylaminoethyl (meth)acrylate, and other such amino-group containing (meth)acrylic acid esters; 3-methacryloxypropyltrimethoxysilane and other such alkoxysilyl-group-containing (meth)acrylic acid esters; methoxyethyl (meth)acrylate, ethylene oxide adduct of (meth)acrylic acid, and other such (meth)acrylic acid derivatives; perfluoroethyl (meth)acrylate, perfluorobutyl (meth)acrylate, and other such (meth)acrylic acid perfluoroalkyl esters; trimethylolpropane tri(meth)acrylate and other such polyfunctional (meth)acrylic acid esters; and so forth. Furthermore, as monomers other than acrylic that are capable of being copolymerized, as monomers having at least one carboxyl group at a radical polymerizable unsaturated group, maleic acid, maleic anhydride, itaconic acid, itaconic anhydride, and so forth may be cited as examples. Furthermore, besides radical polymerizable unsaturated groups, as monomers having at least one hydroxyl group, 2-hydroxyethyl (meth)acrylate, 2-hydroxypropyl (meth)acrylate, 2-hydroxybutyl (meth)acrylate, diethylene glycol mono(meth)acrylate, and so forth may be cited as examples. Moreover, as vinyl monomers and the like which are capable of copolymerization with acrylic monomer, styrene, $\alpha$-styrene, and other such aromatic vinyl-type monomers; vinyltrimethoxysilane and other such trialkyloxysilyl-group-containing vinyl monomers; acrylonitrile, methacrylonitrile, and other such nitrile-group-containing vinyl-type monomers; acrylamide- and methacrylamide-group-containing vinyl-type monomers; vinyl acetate, vinyl versatate, and other such vinyl esters and so forth may be cited as examples.

Using plastic of any of the types described above by way of example as raw material, this may be used as desired as film formed so as to be unstretched, uniaxially stretched, or biaxially stretched, or as a coating in which this is dispersed in solvent or the like. In a case of forming a film, the film is preferably unstretched or uniaxially stretched, more preferably unstretched for achievement of sealing properties. In this case, the printing layer and the sealing layer may be laminated with an adhesive layer, which will be described later, interposed therebetween or the sealing layer may be laminated during the extrusion process when the printing layer is formed.

The thickness of the sealing layer making up the laminate display body of the present invention is preferably 2 um or more and 190 um or less. It is not preferred that the thickness of the sealing layer falls below 2 um since the heat sealing strength of the laminate display body decreases. It is not preferred that the thickness of the sealing layer exceeds 190 um since the thickness of the printing layer is relatively decreased and the visual perceptibility of printing is diminished although the heat sealing properties of the laminate display body is improved. The thickness of the sealing layer is more preferably 3 um or more and 180 um or less, still more preferably 4 um or more and 170 um or less.

1.3.2. Substrate layer

As the type of plastic that makes up the substrate layer that can be included in the laminate display body of the present invention, polyester, polyolefin, polyamide, and so forth may be cited as examples.

As polyester, polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), polybutylene succinate (PBS), and so forth may be cited as examples. Moreover, in addition to the polyesters cited at the foregoing examples, it is also possible to use modified polyesters in which the monomer(s) at such acid site and/or diol site are altered. As acid-site monomer, isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids may be cited as examples. Furthermore, as diol-site monomer, neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, bisphenol A and other such aromatic-type diols, and so forth may be cited as examples. Moreover, as component making up polyester, this may include polyester elastomer(s) comprising $\varepsilon$-caprolactone, tetramethylene glycol, and/or the like. Regarding the polyester raw materials cited above, it is possible to use raw material in which a plurality of types of homopolyester, each of which has polymerized therein one types of carboxylic acid monomer and one types of diol monomer, are mixed (dry blended); and it is possible to use raw material in which two or more types of carboxylic acid monomer and/or two or more types of diol monomer are copolymerized. Furthermore, it is possible to use raw material in which homopolyester(s) and copolymerized polyester(s) are mixed.

As polyolefin, polypropylene (PP), polyethylene (PE), and so forth may be cited as examples. Where polypropylene is employed, there is no particular limitation with respect to stereoregularity, it being possible for this to be isotactic, syndiotactic, and/or atactic, it being possible for these to be present therein in any desired fractional percentage(s). Furthermore, where polyethylene is employed, there is no particular limitation with respect to the density (degree of branching) thereof, it being possible for this to be high density (HDPE), linear low density (LLDPE), and/or low density (LDPE). Furthermore, besides the foregoing homopolymers, raw materials in which two or more different types of monomers are copolymerized may be used; examples of monomers that may be used for copolymerization which may be cited including ethylene, $\alpha$-olefins, and so forth; examples of $\alpha$-olefins which may be cited including propylene, 1-butene, 1-pentene, 1-hexene, 1-heptene, 1-octene, 1-nonene, 1-decene, 4-methyl-1-pentene, 4-methyl-1-hexene, and so forth. The form of copolymerization may be random copolymerization and/or block copolymerization. Moreover, besides the examples of raw materials cited above, polyolefin elastomer and/or ionomer may be employed.

While there is no particular limitation with respect to the melt flow rate (MFR) of polyolefin serving as raw material, it being possible for this be freely chosen as desired, it is preferred that this be 1 g/10 min to 10 g/10 min. When MFR is less than 1 g/10 min, this is not preferred since it would cause the melt viscosity of the raw material to be too high, as a result of which the resin pressure at the time of extruding operation(s) during film formation would be too high, which would tend to cause occurrence of deformation of filter(s) and so forth. On the other hand, when MFR exceeds 10 g/10 min, since this would cause molecular weight to become extremely low, there is a possibility that it would increase the tendency for fracture to occur during film formation, and/or that it would reduce resistance to blocking. It is more preferred that MFR be 2 g/10 min or more and 8 g/10 min, and still more preferred that this be 3 g/10 min or more and 7 g/10 min.

As polyamide, any one type of resin-or a raw material mixture in which two or more types thereof are mixed-selected from among polycaproamide (nylon 6), polyhexamethylene adipamide (nylon 66), caprolactam/lauryl lactam copolymer (nylon 6/12), caprolactam/hexamethylene diammonium adipate copolymer (nylon 6/66), ethylene ammonium adipate/hexamethylene diammonium adipate/hexamethylene diammonium sebacate copolymer (nylon 6/66/610), polymers of meta-xylylenediamine and adipic acid (MXD-6), hexamethylene isophthalamide/terephthalamide copolymer (amorphous nylon), and so forth may be cited as examples. Furthermore, an adhesion improvement layer may be provided at the surface of a film comprising any of the examples of plastics cited above. As material for the adhesion improvement layer, acrylic, a water-soluble or water-dispersible polyester, a hydrophobic polyester in which acrylic is graft copolymerized, and so forth may be cited as examples.

It is preferred that the lower limit of the range in values for relative viscosity (RV) of polyamide serving as raw material be 2.2, and more preferred that this be 2.3. When the foregoing is less than this, crystallization rate may be too high and biaxial stretching may be difficult. On the other hand, it is preferred that the upper limit of the range in values for the RV of polyamide be 4, and more preferred that this be 3.9. When the foregoing is exceeded, there is a possibility that the load or the like on the extruder will become too high and/or that productivity will decrease. The "relative viscosity" in the context of the present invention means the value measured at 25°C using a solution in which 0.5 g of polymer has been dissolved in 50 ml of 97.5% sulfuric acid.

Using plastic of any of the types described above by way of example as raw material, this may be used as desired as film formed so as to be unstretched, uniaxially stretched, or biaxially stretched, or as a coating in which this is dispersed in solvent or the like. In a case of forming a film, the film is preferably uniaxially stretched or biaxially stretched, more preferably biaxially stretched for achievement of mechanical strength. In this case, the printing layer and the substrate layer may be laminated with an adhesive layer, which will be described later, interposed therebetween or the substrate layer may be laminated during the extrusion process when the printing layer is formed.

The substrate layer preferably contains a lubricant in order to improve the lubricity, and the contained concentration is preferably 100 ppm or more and 2000 ppm or less. It is not preferred that the lubricant concentration fall below 100 ppm since the lubricity deteriorates, and thus not only position shift and so forth occur when a laminate display body is fabricated (bonded) but also the handling properties decreases when a laminate display body is formed. It is not preferred that the lubricant concentration exceeds 2000 ppm since the transparency of the substrate layer decreases. The lubricant concentration is more preferably 200 ppm or more and 1900 ppm or less, still more preferably 300 ppm or more and 1800 ppm or less.

To cause the printing properties and/or lubricity of surface(s) thereof to be made satisfactory, it is possible for the substrate layer to be made to comprise layer(s) that have undergone corona treatment, coating treatment, flame treatment, and/or the like, it being possible for same to be comprised thereby as desired without departing from the requirements of the present invention.

1.4. Adhesive layer

As the adhesive layer that can be included in the laminate display body of the present invention, an adhesive for dry lamination or a resin layer obtained by extrusion lamination can be used. The adhesive may be either a one-pack type (drying type) or a two-pack type (curing reaction type). In the case of dry lamination, commercially available polyurethane-based and polyester-based adhesives for dry lamination can be used. Representative examples include Dicdry (registered trademark) LX-703VL manufactured by DIC Corporation; KR-90 manufactured by DIC Corporation; Takenate (registered trademark) A-4 manufactured by Mitsui Chemicals, Inc.; Takelac (registered trademark) A-905 manufactured by Mitsui Chemicals, Inc.; and so forth. In the case of extrusion lamination, a polyolefin-based resin such as polyethylene is melted between layers or between a layer and another layer for pasting, but it is also preferable to laminate an anchor coat layer in order to enhance the adhesive properties of the surface of the layer and the like.

In a case of laminating films with an adhesive layer interposed therebetween, lamination is completed as an adhesive is applied to either film, and then dried or reacted and cured. In the laminate display body of the present invention, the adhesive layer thickness after drying of the adhesive is preferably 1 um or more and 6 um or less, more preferably 2 um or more and 5 um or less.

1.5. Other layers

The laminate display body of the present invention may have layers other than those described above. Taking the configuration described in the "1.1. Layer configuration and thickness" as an example, the gas barrier layer (transparent, opaque) and print layer will be described below.

1.5.1. Gas barrier layer

The gas barrier layer that can be arbitrarily laminated in the laminate display body of the present invention is preferably composed of an inorganic thin film containing a metal or metal oxide as a main component. In addition to the gas barrier composed of the inorganic thin film, the laminated body may further include an anchor coat layer provided under the inorganic thin film layer (between the plastic film and the inorganic thin film) and an overcoat layer provided above the inorganic thin film layer. By providing these layers, improvement in close contact properties to the gas barrier layer, improvement in gas barrier properties, and the like can be expected.

The type of raw material for the gas barrier layer is not particularly limited, and conventionally known materials can be used, the raw material can be appropriately selected according to the purpose in order to satisfy the desired gas barrier properties and the like. Examples of the type of raw material for the gas barrier layer include metals such as silicon, aluminum, tin, zinc, iron, and manganese, and inorganic compounds containing one or more of these metals, and examples of the inorganic compounds include oxides, nitrides, carbides, and fluorides. These inorganic substances or inorganic compounds may be used singly or in combination.

In a case where the gas barrier layer is transparent, silicon oxide (SiOx) and aluminum oxide (AlOx) can be used singly (simple substances) or in combination (binary substances). In a case where the component of the inorganic compound consists of a binary substance of silicon oxide and aluminum oxide, the content of aluminum oxide is preferably 20% by mass or more and 80% by mass or less, more preferably 25% by mass or more and 70% by mass or less. It is not preferred that the content of aluminum oxide is 20% by mass or less since the density of the gas barrier layer may decrease and the gas barrier properties may decrease. It is not preferred that the content of aluminum oxide is 80% by mass or more since the flexibility of the gas barrier layer may decrease, cracking is likely to occur, and as a result, the gas barrier properties may decrease.

The oxygen/metal element ratio in the metal oxide used for the gas barrier layer is preferably 1.3 or more and less than 1.8 since there is little variation in gas barrier properties and excellent gas barrier properties can always be acquired. The oxygen/metal element ratio can be determined by measuring the amounts of the respective elements of oxygen and metal by X-ray photoelectron spectroscopy (XPS) and calculating the oxygen/metal element ratio.

The thickness of the gas barrier layer that can be preferably used in the laminate display body of the present invention is preferably 2 nm or more and 100 nm or less in a case where a metal or metal oxide is vapor-deposited and used as a gas barrier layer. It is not preferred that the thickness of this layer is less than 2 nm since the gas barrier properties are likely to decrease. It is not preferred that the thickness of this layer exceeds 100 nm since there is no corresponding effect of improving gas barrier properties and the manufacturing cost increases. The thickness of the inorganic thin film layer is more preferably 5 nm or more and 97 nm or less, still more preferably 8 nm or more and 94 nm or less.

In a case where a metal foil is used as the gas barrier layer, the thickness of the metal foil is preferably 3 um or more and 100 um or less. It is not preferred that the thickness of this layer is less than 3 um since the gas barrier properties are likely to decrease. It is not preferred that the thickness of this layer exceeds 100 nm since there is no corresponding effect of improving gas barrier properties and the manufacturing cost increases. The thickness of the inorganic thin film layer (metal foil) is more preferably 5 um or more and 97 um or less, still more preferably 8 um or more and 94 um or less.

In a case where the gas barrier layer is opaque, the gas barrier layer can be formed by pasting aluminum foil or vapor-depositing aluminum. The thickness of the aluminum foil is preferably 1 um or more and 100 um or less.

The gas barrier laminate display body thus provided preferably has a water vapor transmission rate of 0.05 $[g/(m^2 \cdot d)]$ or more and 4 $[g/(m^2 \cdot d)]$ or less in an environment having a temperature of 40°C and a relative humidity of 90% RH. It is not preferred that the water vapor transmission rate exceeds 4 $[g/(m^2 \cdot d)]$ since the shelf life of the contents is shortened in a case where the laminated body is used as packaging containing the contents. It is preferred that the water vapor transmission rate is less than 0.05 $[g/(m^2 \cdot d)]$ since the gas barrier properties are enhanced and the shelf life of the contents is extended, but the lower limit of water vapor transmission rate is 0.05 $[g/(m^2 \cdot d)]$ in the current technical level. When the lower limit of water vapor transmission rate is 0.05 $[g/(m^2 \cdot d)]$, it can be said that it is practically sufficient. The upper limit of water vapor transmission rate is preferably 3.8 $[g/(m^2 \cdot d)]$, more preferably 3.6 $[g/(m^2 \cdot d)]$ .

It is preferred that the gas barrier laminate display body have an oxygen transmission rate of 0.05 $[cc/(m^2 \cdot d \cdot atm)]$ or more and 4 $[cc/(m^2 \cdot d \cdot atm)]$ or less in an environment having a temperature of 23°C and a relative humidity of 65% RH. It is not preferred that the oxygen transmission rate exceeds 4 $[cc/(m^2 \cdot d \cdot atm)]$ since the shelf life of the contents is shortened. It is preferred that the oxygen transmission rate is less than 0.05 [cc/(m$^2$·d·atm)] since the gas barrier properties are enhanced and the shelf life of the contents is extended, but the lower limit of oxygen transmission rate is 0.05 [cc/(m$^2$·d·atm)] in the current technical level. When the lower limit of oxygen transmission rate is 0.05 [cc/(m$^2$·d·atm)], it can be said that it is practically sufficient. The upper limit of oxygen transmission rate is preferably 3.8 [cc/(m$^2$·d·atm)], more preferably 3.6 [cc/(m$^2$·d·atm)] .

In the gas barrier laminate display body obtained using the laminate display body of the present invention (in this section, these are collectively referred to as "laminate display body"), the gas barrier layer is laminated and then an overcoat layer may be provided thereon for the purpose of improving scratch resistance and further improving gas barrier properties, and the like.

The type of overcoat layer is not particularly limited, but conventionally known materials, such as compositions containing urethane-based resins and silane coupling agents, compounds containing organosilicon and hydrolysates thereof, water-soluble polymers having hydroxyl or carboxyl groups, can be used, and the materials can be appropriately selected according to the purpose in order to satisfy the desired gas barrier properties and the like.

For the purpose of imparting antistatic properties, ultraviolet absorbency, coloring, thermal stability, lubricity and the like, one or more of various additives may be added to the overcoat layer as long as the object of the present invention is not impaired, and the types and amounts of various additives can be appropriately selected according to the desired purpose.

1.5.2. Print layer

In addition to printing by laser irradiation, characters or patterns may be provided for the purpose of improving design. As materials for forming these characters and patterns, known materials such as ink for gravure printing and ink for flexographic printing can be used. Regarding the number of print layer(s), there may be one such layer or there may be a plurality of such layers. So as to be able to improve design properties by printing a plurality of colors, it is preferred that there be print layer(s) that comprise a plurality of layers. The print layer may be positioned either at the outermost layer or the intermediate layer.

2. Properties of laminate display body

2.1. Heat sealing strength

In the laminate display body of the present invention, it is preferred that the heat sealing strength when the sealing layers are heat-sealed together at a temperature of 140°C, a sealing bar pressure of 0.2 MPa, and a sealing time of 2 seconds is 2 N/15 mm or more and 70 N/15 mm or less. It is not preferred that the heat sealing strength is less than 2 N/15 mm since the sealed portion is easily peeled off. The heat sealing strength is more preferably 3 N/15 mm or more, still more preferably 4 N/15 mm or more. It is more preferable as the heat sealing strength is greater since the sealability when formed into a packaging is enhanced, but the upper limit that can be acquired at present is about 70 N/15 mm. When the upper limit of heat sealing strength is 69 N/15 mm as well, it can be said that it is sufficiently preferable for practical use.

2.2. Heat shrinkage rate

It is preferred that the laminate display body of the present invention have a heat shrinkage rate by hot water of -5% or more and 5% or less in both the width direction and the machine direction in a case of being treated in hot water at 98°C for 3 minutes. It is not preferred that the heat shrinkage rate by hot water exceed 5% since not only the deformation increases and the original shape cannot be maintained in a case where laser irradiation is performed but also cracking occurs in the layer formed of an inorganic substance and the gas barrier properties deteriorate. The heat shrinkage rate by hot water is more preferably 4% or less, still more preferably 3% or less. It is not preferred that the heat shrinkage rate by hot water fall below -5% since this means that the laminate display body stretches and the laminate display body cannot maintain its original shape in the same way as when the shrinkage rate is high. It is more preferred that the heat shrinkage rate by hot water of the laminate display body be -4% or more and 4% or less, and still more preferred that this be -3% or more and 3% or less.

2.3. Tensile fracture strength

In the laminate display body of the present invention, it is preferred that the tensile fracture strength in at least one direction of 360 degrees in the plane is 40 MPa or more and 400 MPa. It is not preferred that the tensile fracture strength falls below 40 MPa since the laminate display body is fractured easily by tension. It is more preferred that the lower limit of the range in values for tensile fracture strength be 50 MPa, and still more preferred that this be 60 MPa. On the other hand, while a tensile fracture strength that exceeds 400 MPa would be preferred in terms of mechanical strength, the level of the art of the present invention is such that the upper limit of the range in values therefor is 400 MPa. As a practical matter, even where the tensile fracture strength is 390 MPa, this will be adequate.

3. Manufacturing conditions of laminate display body

3.1. Manufacturing conditions

The printing layer essential for the laminate display body of the present invention, and the preferred sealing layer and substrate layer can be manufactured under the manufacturing conditions described below. The printing layer will be described below as an example. Here, laser-printed one is called a "laminate display body", and one before laser printing is called a "laminated body".

3.1.1. Mixing and Supply of Raw Materials

In manufacturing the printing layer included in the laminated body of the present invention, it is necessary to add the laser printing pigments described in the "1.2.1. Types of laser printing pigments, amounts thereof added, and methods for adding same".

The laser printing pigment is a metal, and thus usually has a higher specific gravity than the resin constituting the film. Causing two or more types of raw materials having different specific gravities to be mixed and fed to an extruder in this fashion is likely to cause occurrence of variation (segregation) in the supply of raw materials. To prevent such variation, it is preferred that agitator(s) be installed at hopper(s) and plumbing immediately above extruder(s), that plumbing (inner piping) be inserted at interior(s) of hopper(s) immediately above extruder(s) filled with base resin and that laser printing pigment be supplied thereby, that tapered collars for lowering granular pressure of raw materials be installed at respective raw material hoppers, and/or that other such strategy or strategies be adopted to carry out melt extrusion.

3.1.2. Melt extrusion and lamination

A printing layer can be obtained by causing raw materials supplied in the "3.1.1. Mixing and supply of raw materials" to be melt-extruded by extruder(s) to form an unstretched film, and causing this to undergo the prescribed processes indicated below. A sealing layer and a substrate layer may be laminated together with the printing layer in the extrusion process, and each layer can be laminated at arbitrary timing. It is preferable to employ a co-extrusion method for lamination during melt extrusion. This is a method in which resins, which are raw materials for the respective layers, are each melt-extruded by separate extruders, and joined using a feed block or the like in the middle of the resin flow path. Extrusion lamination may be employed in which a resin to be the sealing layer is melt-extruded from a slot die and laminated in an arbitrary process from extrusion of the printing layer and stretching in the machine direction to winding.

As method for melt extruding resin raw material, known methods may be employed, methods employing extruder(s) equipped with barrel(s) and screw(s) being preferred. It is preferred that a hopper dryer, paddle dryer, or other such dryer and/or vacuum dryer be used in advance to cause raw material (polyester, polyamide or the like) that might otherwise decompose due to the effect of moisture when molten to be dried until the moisture content thereof is 100 ppm or less, more preferably 90 ppm or less, and still more preferably 80 ppm or less. After the raw material has been dried in such fashion, the resin that has been melted by extruder(s) is quenched, as a result of which it is possible to obtain unstretched film. With respect to extrusion, this may be carried out by adopting the T die method, tubular method, and/or any other such known method as desired.

By thereafter quenching the film that is molten due to having been extruded, it is possible to obtain unstretched film. As method for quenching molten resin, a method on which the molten resin from the orifice fixture is cast onto a rotating drum where it is quenched and allowed to solidify to obtain a substantially unoriented resin sheet might be favorably adopted.

The film serving as a printing layer may be formed in accordance with any of the following techniques: unstretched; uniaxially stretched (stretching in at least one of the vertical (machine) direction or the horizontal (transverse) direction); biaxially stretched. However, in consideration of mechanical strength, uniaxial stretching is preferred, and biaxial stretching is more preferred. Similarly, the substrate layer is also preferably uniaxially stretched, more preferably biaxially stretched. However, the sealing layer is preferably unstretched for achievement of sealing strength.

While the description that follows is given with a focus on the sequential biaxial stretching method employing machine direction stretching - transverse direction stretching in which stretching is first carried out in the machine direction and stretching is subsequently carried out in the transverse direction, there is no objection to transverse direction stretching - machine direction stretching in which the order is reversed, as this will merely cause a change in the principal orientation direction. There would moreover be no objection to the simultaneous biaxial stretching method in which stretching in the machine direction and transverse direction are carried out simultaneously.

3.1.3. First (machine direction) stretching

Stretching in the first direction (vertical or machine direction) may be carried out by causing the film to be fed into a machine direction stretching device in which a plurality of groups of rolls are arranged in continuous fashion. In carrying out machine direction stretching, it is preferred that preheating roll(s) be used to carry out preheating of the film. The preheating temperature is set so as to be between glass transition temperature Tg and melting point Tm + 50°C, as determined based on the Tg of the plastic that makes up the film. When the preheating temperature is less than Tg, this is not preferred since stretching will be difficult at the time that stretching in the machine direction is carried out, and there will be a tendency for fracture to occur. It is not preferred the heating temperature is higher than Tm + 50°C since the film is likely to stick to the roll and the film is likely to be wound around the roll.

When film reaches between Tg and Tm + 50°C, stretching in the machine direction is carried out. The stretching ratio in the machine direction should be 1x or more and 5x or less. As 1x would mean that there is no stretching in the machine direction, the stretching ratio in the machine direction should be 1x to obtain film which is uniaxially stretched in the transverse direction, and the stretching ratio in the machine direction should be 1.1x or more to obtain biaxially stretched film. Causing the machine direction stretching ratio to be 1.1x or more is preferred, since this will cause void(s) to be formed within the printing layer. While there is no objection to employment of any value as the upper limit of the range in values for the stretching ratio in the machine direction, as too great a stretching ratio in the machine direction will increase the tendency for fracture to occur during the stretching in the transverse direction that follows, it is preferred that this be 10x or less. It is more preferred that the stretching ratio in the machine direction be 1.2x or more and 9.8x or less, and still more preferred that this be 1.4x or more and 9.6x or less.

3.1.4. Second (transverse direction) stretching

Following first (machine direction) stretching, it is preferred that stretching in the width direction be carried out at a stretching ratio of on the order of 2x to 13x at between Tg and Tm + 50°C while in a state such that the two ends in the transverse direction (the direction perpendicular to the machine direction) of the film are gripped by clips within a tenter. Before carrying out stretching in the transverse direction, it is preferred that preheating be carried out, in which case preheating should be carried out until the temperature at the display material or packaging surface reaches between Tg and Tm + 50°C.

It is more preferred that the stretching ratio in the transverse direction be 2.2x or more and 12.8x or less, and still more preferred that this be 2.4x or more and 12.6x or less. Since the stretching rates are different for stretching in the machine direction versus stretching in the transverse direction (the stretching rate is higher for stretching in the machine direction), the preferred stretching ratio ranges are different. It is preferred that the area ratio which is the product of the machine direction stretching and transverse direction stretching ratios be 2.2x or more and 64x.

Following stretching in the transverse direction, it is preferred that the film be made to pass through an intermediate zone in which no procedure such as would cause it to be actively heated is performed. Relative to the zone in which stretching in the transverse direction is carried out at the tenter, since the temperature at the final heat treatment zone that follows is high, failure to establish an intermediate zone would cause heat (hot air itself and/or radiated heat) from the final heat treatment zone to flow into the operation at which stretching in the transverse direction is carried out. In this case, since the temperature in the zone in which stretching in the transverse direction is carried out would not be stable, there would be occurrence of variation in physical properties. It is therefore preferred that following stretching in the transverse direction the film be made to pass through an intermediate zone until a prescribed time has elapsed before final heat treatment is performed. It is important when in this intermediate zone, where rectangular strips are made to hang down from above while the film is kept from passing therethrough, that hot air from the final heat treatment zone and from the zone in which stretching in the transverse direction is carried out as well as any concomitant flow that would otherwise accompany movement of the film be blocked, so that those strips are made to hang down from above in almost perfectly vertical fashion. It will be sufficient if the time of passage through the intermediate zone is on the order of 1 second to 5 seconds. When the time is less than 1 second, length of time in the intermediate zone will be insufficient, and there will be inadequate heat blocking effect. On the other hand, while longer times in the intermediate zone are preferred, since too long a time therein would result in increased equipment size, on the order of 5 seconds will be sufficient.

### 3.1.5. Heat treatment

Following passage through the intermediate zone, it is preferred at the heat treatment zone that heat treatment be carried out at between 100°C and 280°C. Since heat treatment promotes crystallization of the film, not only will this make it possible to reduce any heat shrinkage that occurred during stretching operation(s), but this will also tend to increase tensile fracture strength. When heat treatment temperature is less than 100°C, this is not preferred since it would tend to increase the heat shrinkage of the film. On the other hand, when heat treatment temperature exceeds 280°C, this is not preferred since the film will tend to melt, and tensile fracture strength will tend to be reduced. It is more preferred that the heat treatment temperature be between 110°C and 270°C, and still more preferred that this be between 120°C and 260°C.

It is preferred that the time of passage through the heat treatment zone be 2 seconds or more and 20 seconds or less. When the time of passage therethrough is 2 seconds or less, heat treatment will be meaningless since the film will pass through the heat treatment zone without the surface temperature of the film having reached the temperature setpoint. Since the longer the time of passage therethrough the greater will be the effect of heat treatment, it is more preferred that this be 5 seconds or more. But since attempting to increase the length of time of passage therethrough would result in increased equipment size, as a practical matter it will be sufficient if this is 20 seconds or less.

During heat treatment, decreasing the distance between tenter clips (causing relaxation in the width direction) by some desired ratio will make it possible to reduce heat shrinkage in the width direction. For this reason, it is preferred during final heat treatment that the film be made to undergo relaxation in the width direction within the range 0% or more and 10% or less (a percent relaxation of 0% indicating that the film is not made to undergo relaxation). Whereas the higher the percent relaxation in the width direction the greater will be the reduction in shrinkage in the width direction, as the upper limit of the range in values for the percent relaxation (shrinkage of film in the width direction immediately following stretching in the width direction) is determined by the raw materials used, the conditions under which stretching in the width direction was carried out, and the heat treatment temperature, it will not be possible to cause the film to undergo relaxation to the point where this would be exceeded. At a laser printing layer making up a display material in accordance with the present invention, the upper limit of the range in values for the percent relaxation in the width direction is 10%. Furthermore, during heat treatment, it is also possible to decrease the distance between clips in the machine direction by some desired ratio (to cause relaxation in the machine direction).

### 3.1.6. Cooling

Following passage through the heat treatment zone, it is preferred at the cooling zone that a cooling airstream at 10°C or more and 50°C or less be used to carry out cooling of the film for a passage time therethrough of 2 seconds or more and 20 seconds or less.

By thereafter causing the film to be rolled up as portions cut from the two ends thereof are removed therefrom, a film roll is obtained.

### 3.2. Lamination method other than co-extrusion

When the laminated body of the present invention is manufactured, in a case where the printing layer, the laser non-absorbing layer and other layers (including a gas barrier layer, an anchor coat layer and an overcoat layer that are laminated on any layer, if necessary) are separately formed by the methods described in the "3.1. Film manufacturing conditions" and then laminated, the lamination method is not particularly limited, and adjacent films can be pasted by conventionally known dry lamination or extrusion lamination. In the laminated body of the present invention, in order to laminate the printing layer, the laser non-absorbing layer and other layers with an adhesive layer interposed therebetween, an adhesive that makes up the adhesive layer is first applied to any one of the films. After that, another film is bonded to the surface coated with the adhesive, and the adhesive is dried to volatilize the solvent. The drying conditions vary depending on the adhesive, but the adhesive is cured by, for example, being left to stand in an environment of 40°C for one day or longer.

### 3.3. Lamination (formation) method of gas barrier layer

The method for forming the gas barrier layer is not particularly limited, and known manufacturing methods can be employed as long as the object of the present invention is not impaired. Among known manufacturing methods, it is preferable to employ a vapor deposition method. Examples of the vapor deposition method include a vacuum vapor deposition method, a sputtering method, a PVD (physical vapor deposition) method such as ion blating, and a CVD (chemical vapor deposition) method. Among these, the vacuum vapor deposition method and the physical vapor deposition method are preferred, and the vacuum vapor deposition method is particularly preferred from the viewpoint of production speed and stability. As a heating mode in the vacuum deposition method, resistance heating, high-frequency induction heating, electron beam heating, or the like can be used. Oxygen, nitrogen, water vapor, or the like may be introduced as a reactive gas, or reactive vapor deposition using means such as ozone addition or ion assist may be used. The film forming conditions may be changed, such as applying a bias to the substrate, raising the temperature of the substrate, or cooling the substrate, as long as the object of the present invention is not impaired.

Here, a method for forming a gas barrier layer by a vacuum deposition method will be described. When a gas barrier layer is formed, the laminated body of the present invention is conveyed to a gas barrier layer manufacturing apparatus via a metal roll. As an example of the configuration of the gas barrier layer manufacturing apparatus, the apparatus includes an unwinding roll, a coating drum, a winding roll, an electron beam gun, a crucible, and a vacuum pump. The laminated body is set on the unwinding roll, passes through the coating drum, and is wound around the winding roll. The pressure in the pass line of the laminated body (inside the gas barrier layer manufacturing apparatus) is reduced by the vacuum pump, an inorganic material set in the crucible is vaporized by a beam emitted from the electron gun and deposited onto the laminated body that passes through the coating drum. During the deposition of inorganic material, the laminated body is subjected to heat and tension between the unwinding roll and the winding roll. It is not preferred that the temperature applied to the laminated body is too high since the laminated body undergoes not only great heat shrinkage but also softening and the elongation deformation due to tension is likely to occur. Furthermore, the temperature drop (cooling) of the laminated body after the vapor deposition process is large, the amount of shrinkage after expansion (different from heat shrinkage) is large, the gas barrier layer cracks, and the desired gas barrier properties are less likely to be exerted. It is more preferable as the temperature applied to the laminated body is lower since the deformation of laminated body is suppressed, but the amount of inorganic material vaporized decreases, the thickness of the gas barrier layer thus decreases, and there is a concern that the desired gas barrier properties are not achieved. The temperature applied to the laminated body is preferably 100°C or more and 180°C or less, more preferably 110°C or more and 170°C or less, still more preferably 120°C or more and 160°C or less.

In a case where an aluminum foil is pasted as an opaque gas barrier layer, the aluminum foil can be pasted by the method mentioned in the "1.4. Adhesive layer".

3.4. Lamination (formation) method of overcoat layer

When an overcoat layer is formed, the laminated body is conveyed to the coating equipment via a metal roll. Examples of equipment configuration include an unwinding roll, a coating process, a drying process, and a winding process. At the time of overcoating, the laminated body set on the unwinding roll is subjected to the coating process and the drying process via the metal roll and finally led to the winding roll. The coating method is not particularly limited, and conventionally known methods, such as a gravure coating method, a reverse coating method, a dipping method, a low coating method, an air knife coating method, a comma coating method, a screen printing method, a spray coating method, a gravure offset method, a die coating method, and a bar coating method, can be employed, and the coating method can be appropriately selected according to the desired purpose. Among these, a gravure coating method, a reverse coating method, and a bar coating method are preferred from the viewpoint of productivity. As the drying method, one heating method or a combination of two or more heating methods, such as hot air drying, hot roll drying, high frequency irradiation, infrared irradiation, and UV irradiation, can be used.

In the drying process, the laminated body is heated and also subjected to tension between the metal rolls. It is not preferred that the temperature at which the laminated body is heated in the drying process is too high since the laminated body undergoes not only great heat shrinkage but also softening, the elongation deformation due to tension is likely to occur, and the gas barrier layer of the laminated body is likely to crack. Furthermore, the temperature drop (cooling) of the laminated body after the drying process is large, accordingly the amount of shrinkage after expansion (different from heat shrinkage) is large, the gas barrier layer and the overcoat layer crack, and the desired gas barrier properties are less likely to be achieved. It is more preferable as the temperature at which the laminated body is heated is lower since the deformation of laminated body is suppressed, but the solvent of the coating liquid is less likely to be dried, and there is thus a concern that the desired gas barrier properties are not achieved. The temperature at which the laminated body is heated is preferably 60°C or more and 200°C or less, more preferably 80°C or more and 180°C or less, still more preferably 100°C or more and 160°C or less.

4. Laser-printed laminate display body

Printing can be performed by irradiating the laminated body of the present invention with laser light. The "printed portion" and "non-printed portion" described below indicate the positional relation in the in-plane direction of the display body, and the former refers to the portion that has been discolored black by laser irradiation and the latter refers to the portion that has not been subjected to laser irradiation.

4.1. Properties of laser-printed laminate display body

4.1.1. Color L* value (non-printed portion and printed portion)

In the laminate display body of the present invention, it is preferred that the absolute value of the difference in color L* value between the printed portion and the non-printed portion (hereinafter sometimes referred to simply as "difference in L* value") be 1.0 or more and 10.0 or less. When this difference is less than 1.0, the color tones of the printed portion and non-printed portion become close to each other, and this makes it difficult to visually recognize the printing. It is not preferred that the difference in L* value exceeds 10.0 since the printing is likely to be visually recognized, but it is necessary to increase the laser irradiation power accordingly, this may cause great damage to the laminate display body, and troubles such as perforation of the laminate display body occur. It is more preferred that the difference in L* value be 1.5 or more and 9.5 or less, and still more preferred that this be 2.0 or more and 9.0 or less.

4.1.2. Printing size

It is preferred that the size of printing (portions, such as characters and patterns, having different color L* values from white portions) drawn on the laminate display body of the present invention be 0.2 mm or more and 100 mm or less in either height or width. As it is said that the resolving power of the human eye is on the order of 0.2 mm, when the size of character falls below 0.2 mm, the difference in color L* value is likely to be less than 1, making recognition of printing difficult. On the other hand, when the printing size is above 100 mm, while this is preferred inasmuch as it facilitates recognition of printing, this is not preferred since when the printing size is too large it will cause the amount of information written on the packaging to be too small because the use of the present invention assumes display on the packaging. It is more preferred that the printing size be 0.5 mm or more and 90 mm or less, and still more preferred that this be 1 mm or more and 80 mm or less.

4.2. Laser printing conditions

As types (wavelengths) of lasers that may be used to carry out printing in the present invention, CO2 lasers (10600 nm), YAG lasers (1064 nm), $YVO_4$ lasers (1064 nm), fiber lasers (1064 nm and 1090 nm), green lasers (532 nm), and UV lasers (355 nm) may be cited as examples. Among these, while there is no particular limitation with respect to the type of laser used in the display material of the present invention, CO2 lasers being often used for ablation of plastic, as they are often used for a purpose that is different from printing which is the gist of the present invention, they are not preferred as a laser source. As laser source, YAG lasers, $YVO_4$ lasers, fiber lasers, green lasers, and UV lasers are preferred, YAG lasers, fiber lasers, and UV lasers being more preferred. Commercially available devices may be used for laser printing, representative examples of which that may be cited including the LM-2550 (YAG laser) manufactured by Brother Industrial Printing, Ltd.; the MX-Z2000H-V1 (fiber laser) manufactured by Omron Corporation; the 8028 Trotec Speedy 100 flexx (fiber laser) manufactured by Trotec; the MD-X1000 (YVO4 laser) and the MD-U1000C (UV laser) manufactured by Keyence Corporation; and so forth.

Regarding laser printing conditions, while the specifications and conditions that may be established will differ for each device manufacturer and for each model, and will moreover differ depending on the film on which printing is to be carried out, for which reason it is impossible to speak to every situation, the following will apply where the MD-U1000C (UV laser; wavelength 355 nm) manufactured by Keyence Corporation is employed by way of example.

It is preferred that laser power be such that output is 20% or more and 80% or less of the maximum 13 W specified for the device. When output is less than 20%, this is not preferred, since printing density will be reduced, and visual perceptibility will be reduced. When output is 80% or more, this is not preferred, since this will cause perforation of the display body. It is more preferred that output be 25% or more and 75% or less, and still more preferred that this be 30% or more and 70% or less. It is preferred that pulse frequency be 10 kHz or more and 100 kHz or less. In a case where the frequency falls below 10 kHz, this is not preferred, since the laser energy per irradiation will be high, and there will be a tendency for the fractional decrease in thickness at the printed portion to rise above 80 vol%. Conversely, when frequency rises above 100 kHz, although this will facilitate causing the fractional decrease in thickness at the printed portion to be 80 vol% or less, there are situations in which this will make it difficult to achieve a difference in color L* value at the printed portion that is 1 or more. It is more preferred that this be 15 kHz or more and 95 kHz or less, and still more preferred that this be 20 kHz or more and 90 kHz or less.

It is preferred that scan speed be 10 mm/sec or more and 3000 mm/sec or less. When scan speed falls below 10 mm/sec, this is not preferred since the fact that printing speed will be extremely low will cause the display body production rate to be reduced. On the other hand, when scan speed rises above 3000 mm/sec, this is not preferred since printing density will be reduced and it will be difficult to achieve a difference in color L* value that is 1 or more. It is more preferred that scan speed be 100 mm/sec or more and 2900 mm/ or less, and still more preferred that this be 200 mm/sec or more and 2800 mm/ or less.

5. Packaging manufacturing method

The laminate display body of the present invention can be suitably used as a printed packaging. As the packaging, vertical pillows, horizontal pillows, gusset bags, and other bags made by heat sealing, and fusion cut bags made by fusion sealing, and so forth may be cited as examples. Adhesives such as hot melt may be used for pasting of these. The packaging also includes lid materials for plastic containers and bottle labels formed in a cylindrical shape by center sealing with a solvent. It is only required that the display body of the present invention makes up at least part of the packaging.

The laminate display body of the present invention or a packaging including the same can be suitably used for various goods such as foods, medicines and industrial products.

EXAMPLES

Next, although the present invention is described below in more specific terms by way of working examples and comparative examples, the present invention is not to be limited in any way by the modes employed in such working examples, it being possible for changes to be made as appropriate without departing from the gist of the present invention.

<Polyolefin raw material>

<Polyolefin A>

As Polyolefin A, FS2011DG3 manufactured by Sumitomo Chemical Co., Ltd., was used.

<Polyolefin B>

As Polyolefin B, FS7053G3 manufactured by Sumitomo Chemical Co., Ltd., was used.

<Polyolefin C>

60% by mass of $CaCO_3$ was kneaded into Polyolefin A to obtain Polyolefin C.

<Polyolefin D>

60% by mass of $TiO_2$ was kneaded into Polyolefin A to obtain Polyolefin D.

<Polyester raw materials>

[Polyester A]

As Polyester A, RE553 manufactured by Toyobo Co., Ltd., was used.

[Polyester B]

As Polyester B, 50% by mass of $TiO_2$ was kneaded into Polyester A to obtain Polyester B.

[Polyester C]

As Polyester C, Polyester A and "Tomatec Color 42-920A (Primary Constituent $Bi_2O_3$)" laser pigment (manufactured by Tokan Material Technology Co., Ltd.) were mixed (dry blended) at a mass ratio of 95 : 5, and this was fed into a screw-type extruder, where it was heated at 275°C and melt blended. This molten resin was expelled with cylindrical shape in continuous fashion from a strand die, this being cut at a strand cutter to obtain chip-like Polyester C (masterbatch).

[Polyester D]

As Polyester D, RE555 (masterbatch into which 7000 ppm of $SiO_2$ was kneaded) manufactured by Toyobo Co., Ltd., was used.

Respective polyolefin raw material and polyester raw material compositions are shown in Table 1.

[Table 1]

| Name of raw material | Resin type | Laser printing pigment | |
|---|---|---|---|
| | | Type | Amount added |
| Polyolefin A | Polypropylene | Absence | - |
| Polyolefin B | Propylene-ethylene copolymer | Absence | - |
| Polyolefin C | Polypropylene | $CaCO_3$ | 60 wt% |
| Polyolefin D | Polypropylene | $TiO_2$ | 60 wt% |
| Polyolefin E | Polymethylpentene 70wt%/Polystyrene 30wt% | Absence | - |
| Polyester A | polyethylene terephthalate | Absence | - |
| Polyester B | polyethylene terephthalate | $TiO_2$ | 50 wt% |
| Polyester C | polyethylene terephthalate | $Bi_2O_3$ | 5 wt% |
| Polyester D | polyethylene terephthalate | $SiO_2$ | 7000 ppm |

[Film 1]

Polyolefin A, Polyolefin C, and Polyolefin D were mixed at a mass ratio of 45 : 50 : 5 as raw materials for Layer A; Polyolefin A, Polyolefin B, and Polyolefin C were mixed at a mass ratio of 10 : 70 : 20 as raw materials for Layer B.

The raw materials mixed for Layer A and Layer B were respectively fed into different screw-type extruders, and were melted and extruded from a T die at a shear rate of 1000 sec-1. A feedblock was used partway along the flow paths of the respective molten resins so as to cause them to be joined, and this was expelled from a T die and taken up at a draft ratio of 1.2 as it was cooled on a chill roll, the surface temperature of which was set to 30°C, to obtain unstretched laminated film. Molten resin flow paths were established so as to cause the laminated film to be such that the central layer thereof was Layer A, and the two outermost layers thereof were Layer B (i.e., a B/A/B constitution in which there were three layers of two types), the amounts expelled therefrom being adjusted so as to cause the thickness ratio of Layer A and Layer B to be 90/10 (B/A/B = 5/90/5).

The cooled and solidified unstretched laminated film which was obtained was guided to a machine direction stretching device in which a plurality of groups of rolls were arranged in continuous fashion, and this was made to undergo preheating on preheating rolls until the film temperature reached 125°C, following which this was stretched by a factor of 4x.

Following machine direction stretching, the film was guided to a transverse direction stretching device (tenter), where it was made to undergo preheating for 8 seconds until the surface temperature thereof reached 155°C, following which it was stretched by a factor of 9.8x in the width direction (horizontal direction). Following transverse direction stretching, the film was guided while still in that state to an intermediate zone, being made to pass therethrough in 1.0 second. While in the intermediate zone of the tenter, where rectangular strips were made to hang down from above while the film was kept from passing therethrough, hot air from the heat treatment zone and hot air from the zone in which stretching in the transverse direction was carried out was blocked, so that those strips were made to hang down from above in almost perfectly vertical fashion.

Thereafter, following passage through the intermediate zone, the film was guided to the heat treatment zone, where heat treatment was carried out for 9 seconds at 155°C. At this time, at the same time that heat treatment was being carried out, the distance between clips in the width direction of the film was reduced, causing this to undergo 6% relaxation treatment in the width direction. Following passage through the final heat treatment zone, the film was cooled for 5 seconds in a cooling airstream at 30°C. Portions were cut and removed from the two edges thereof and this was rolled up into a roll 400 mm in width to continuously manufacture a prescribed length of biaxially stretched film of thickness 80 um. The properties of the film that was obtained were evaluated in accordance with the foregoing methods. The manufacturing conditions are shown in Table 2.

[Films 2-4]

In similar fashion as at Film 1, the various conditions were altered to continuously form films at Films 2 through 4. The manufacturing conditions for the respective films are shown in Table 2.

[Films 5-8]

PYLEN Film-CT (registered trademark) P1128-30 um manufactured by Toyobo Co., Ltd., an unstretched polypropylene film was used as Film 5, LIX Film (registered trademark) L4102-30 um manufactured by Toyobo Co., Ltd., an unstretched linear low-density polyethylene film, was used as Film 6, ESTER Film (registered trademark) E5102-12 um manufactured by Toyobo Co., Ltd., a biaxially stretched polyethylene terephthalate film was used as Film 7, and HARDEN Film (registered trademark) N1102-15 um manufactured by Toyobo Co., Ltd., a biaxially stretched polyamide film was used as Film 8. Names of the respective films are shown in Table 2.

[Table 2]

| | | Film 1 | Film 2 | Film 3 | Film 4 | Film 5 | Film 6 | Film 7 | Film 8 |
|---|---|---|---|---|---|---|---|---|---|
| Raw material composition of layer A [mass%] | Polyolefin A | 45 | 55 | 0 | 0 | | | | |
| | Polyolefin B | 0 | 0 | 0 | 0 | | | | |
| | Polyolefin C | 50 | 20 | 0 | 0 | | | | |
| | Polyolefin D | 5 | 25 | 0 | 0 | | | | |
| | Polyolefin E | 0 | 0 | 7 | 0 | | | | |
| | Polyester A | 0 | 0 | 88 | 90 | | | | |
| | Polyester B | 0 | 0 | 5 | 0 | | | | |
| | Polyester C | 0 | 0 | 0 | 3 | | | | |
| | Polyester D | 0 | 0 | 0 | 7 | | | | |
| Raw material composition of layer B [mass%] | Polyolefin A | 10 | 30 | 0 | - | | | | |
| | Polyolefin B | 70 | 70 | 0 | - | | | | |
| | Polyolefin C | 20 | 0 | 0 | - | | | | |
| | Polyolefin D | 0 | 0 | 0 | - | | | | |
| | Polyolefin E | 0 | 0 | 0 | - | | | | |
| | Polyester A | 0 | 0 | 60 | - | | | | |
| | Polyester B | 0 | 0 | 30 | - | | | | |
| | Polyester C | 0 | 0 | 0 | - | P1128 | L4102 | E5102 | N1102 |
| | Polyester D | 0 | 0 | 10 | - | | | | |
| Laser pigment of layer A | Type | $TiO_2$/$CaCO_3$ | $TiO_2$/$CaCO_3$ | $TiO_2$ | $Bi_2O_3$ | | | | |
| | Amount added [wt%] | 3.0/30 | 15/12 | 2.5 | 0.15 | | | | |
| Laser pigment of layer B | Type | $CaCO_3$ | Absence | $TiO_2$ | - | | | | |
| | Amount added [wt%] | 12 | - | 15 | - | | | | |
| Layer configuration | | B/A/B | B/A/B | B/A/B | A | | | | |
| Thickness ratio among respective layers [vol%] | | 5/90/5 | 20/60/20 | 25/50/25 | 100 | | | | |

| | | Film 1 | Film 2 | Film 3 | Film 4 | Film 5 | Film 6 | Film 7 | Film 8 |
|---|---|---|---|---|---|---|---|---|---|
| Stretching in machine direction (vertical stretching) | Temperature for stretching [°C] | 125 | 120 | 90 | 90 | | | | |
| | Stretching ratio | 4.0 | 4 . 7 | 3.1 | 3.5 | | | | |
| Stretching in transverse direction (horizontal stretching) | Temperature for stretching [°C] | 155 | 145 | 125 | 105 | | | | |
| | Stretching ratio | 9.8 | 10.1 | 4.2 | 3.8 | | | | |
| Heat Treatment | Temperature [°C] | 155 | 160 | 230 | 230 | | | | |
| | Percent relaxation (width direction) [%] | 5 | 8 | 6 | 3 | | | | |
| Film thickness [μm] | | 50 | 35 | 100 | 50 | 30 | 30 | 12 | 15 |

EP 4 309 892 A1

[Working example 1]

Film 5 was bonded on Film 1 by dry lamination using a urethane-based two-pack curing adhesive ("TAKELAC (registered trademark) A525S" and "TAKENATE (registered trademark) A50" manufactured by Mitsui Chemicals, Inc. were blended at a weight ratio of 13.5 : 1), and aging was performed at 40°C for 4 days to obtain a laminated body. At this time, the thickness of the adhesive layer was 3 um.

This laminated body was cut into A4 size (290 mm in machine direction × 210 mm in width direction), and "12345ABCDE" was printed in the center of the film at a pulse frequency of 40 kHz, a scanning speed of 2000 mm/min, and an output of 30% using a UV laser with a wavelength of 355 nm (Laser Marker MD-U1000C manufactured by Keyence Corporation) to fabricate a laminate display body. The size per character was approximately 5 mm in height × approximately 3 mm in width.

Table 3 shows the evaluation results regarding the layer configuration, physical properties, and printing of the laminate display body.

[Working example 2]

An aluminum oxide ($Al_2O_3$) thin film was formed as a gas barrier layer on one side of Film 7 using aluminum as a vapor deposition source by a vacuum deposition method while oxygen gas was introduced using a vacuum vapor deposition machine. The thickness of the gas barrier layer was 10 nm. The gas barrier layer side of Film 7 and Film 1 were bonded together in the same manner as in Example 1 to fabricate a laminated body.

This laminated body was cut into A4 size (290 mm in machine direction × 210 mm in width direction), and "12345ABCDE" was printed in the center of the film at a pulse frequency of 30 kHz, a scanning speed of 1500 mm/min, and an output of 80% using a fiber laser with a wavelength of 1064 nm (Laser Marker 8028 Trotec Speedy 100 flexx manufactured by Trotec) to fabricate a laminate display body. The size per character was approximately 8 mm in height × approximately 5 mm in width.

Table 3 shows the evaluation results regarding the layer configuration, physical properties, and printing of the laminate display body.

[Working examples 3-6; comparative examples 1 and 2]

In similar fashion as in Working Example 1 and 2, the type of film used, vapor deposition source, and laser source/irradiation conditions were variously altered to fabricate the laminate display bodies of Working Examples 3 through 6 and Comparative Examples 1 and 2. In Example 6, oxygen gas was not introduced during vacuum deposition. MD-U1000C Laser Marker manufactured by Keyence Corporation was employed in all cases where a UV laser was used, and 8028 Trotec Speedy 100 flexx Laser Marker manufactured by Trotec was employed in all cases where a fiber laser was used.

Table 3 shows the evaluation results regarding the layer configuration, physical properties, and printing of the laminate display body.

<Evaluation method of laminate display body>

The evaluation method of the laminate display body is as follows. For samples of the non-printed portion, the samples used were cut out from portions that were 1 mm or more away from the printed portion. In a case where the machine direction and the width direction cannot be identified immediately for reasons such as a small area of the film, the measurement may be performed by determining the machine direction and the width direction tentatively, and no particular problem arises even if the machine direction and the width direction, which are tentatively determined, are 90 degrees different from the true directions.

[Thickness]

The thickness was measured at five points using a micrometer (Millitron 1254D manufactured by Feinpruf GmbH), and the average value thereof was determined.

[Heat sealing strength]

The heat sealing strength was measured in accordance with JIS Z1707. The specific procedure will be shown. The sealing layers of the samples were pasted to each other with a heat sealer. The heat sealing conditions were set to an upper bar temperature of 140°C, a lower bar temperature of 30°C, a pressure of 0.2 MPa, and a time of 2 seconds.

The pasted sample was cut so that the seal width was 15 mm. The sealing strength was measured at a tensile speed of 200 mm/min using a universal tensile tester "Autograph AG-Xplus" (manufactured by Shimadzu Corporation). The peel strength is indicated by strength per 15 mm (N/15 mm) .

[Heat shrinkage rate]

The film was cut into a 10 cm × 10 cm square, immersed in hot water at 98°C ± 0.5°C for 10 seconds without load to be shrunk, then immersed in water at 25°C ± 0.5°C for 10 seconds, and removed from the water. After that, the dimensions of the film in the machine and transverse directions were measured, and the shrinkage rate in each direction was determined according to the following Equation 3. The measurement was performed 2 times and the average value thereof was determined.

$$\text{Shrinkage rate} = \{(\text{Length before shrinkage} - \text{Length after shrinkage})/\text{Length before shrinkage}\} \times 100 \ (\%)$$

$$\text{Equation 3}$$

[Tensile fracture strength]

Strip-like film samples which were 140 mm in the measurement direction and 20 mm in the direction (width direction of the film) perpendicular to the measurement direction were prepared in accordance with JIS K7113. An "Autograph AG-Xplus" universal tensile tester (manufactured by Shimadzu Corporation) was used, the two ends of the test piece being held such that a 20 mm length thereof was gripped by a chuck at either end (chuck separation 100 mm), tensile testing being carried out under conditions of 23° C ambient temperature and 200 mm/min elongation rate, strength (stress) at the time of tensile fracture being taken to be the tensile fracture strength (MPa). The machine direction and the width direction were used as measurement directions.

[Total luminous transmittance (non-printed portion)]

A hazemeter (300A; manufactured by Nippon Denshoku Industries Co., Ltd.) was used to measure the total luminous transmittance of the non-printed portion in accordance with JIS-K-7136. Measurements were carried out twice, and the average thereof was determined.

[Water vapor transmission rate]

The water vapor transmission rate was measured in conformity with JIS K7126 B method. The water vapor transmission rate was measured in the direction in which the humidity-conditioning gas permeated from the heat sealing layer side of the laminated body to the inorganic thin film layer side in an atmosphere having a temperature of 40°C and a humidity of 90% RH using a water vapor transmission rate measuring instrument (PERMATRAN-W3/33MG manufactured by AMETEK MOCON). Before measurement, the sample was left to stand for 4 hours in an environment having a humidity of 65% RH to condition the humidity.

[Oxygen transmission rate]

The oxygen transmission rate was measured in conformity with JIS K7126-2 method. The oxygen transmission rate was measured in the direction in which oxygen permeated from the heat sealing layer side of the laminate display body to the inorganic thin film layer side in an atmosphere having a temperature of 23°C and a humidity of 65% RH using an oxygen transmission rate measuring instrument (OX-TRAN 2/20 manufactured by AMETEK MOCOM). Before measurement, the sample was left to stand for 4 hours in an environment having a humidity of 65% RH to condition the humidity.

<Evaluation method of laser-printed laminate display body>

[Printing size]

Among the characters "12345ABCDE" printed as, a stainless steel straightedge ruler (TZ-RS15 manufactured by Kokuyo Co., Ltd.) was used to measure by visual inspection in increments of 0.5 mm the heights and widths of those at "345ABC", the average thereof being taken to be the printing size. Where the printing size was less than 0.5 mm, an RH-2000 digital microscope manufactured by Hirox Co., Ltd., was separately used to measure the printing size. Software provided with RH-2000 digital microscope manufactured by Hirox Co., Ltd., was used for measurement of the printing size.

[Color L* value (printed portion and non-printed portion)]

A spectroscopic color difference meter (ZE-6000; manufactured by Nippon Denshoku Industries Co., Ltd.) was used in reflection mode to respectively measure the L* values at the printed portion and the non-printed portion of a single film sample. The specific method used for measurement of the printed portion was as follows.

From the characters "12345ABCDE" printed as, a square sample which was 3 cm on a side was cut so as to contain the entirety of the "B" (it being considered acceptable at this time if character(s) other than the "B" also happened to be contained therein), and this was measured. Furthermore, the light source for measurement at the color difference meter employed a 6φ stage (the aperture on which light for measurement fell being approximately 1 cm in diameter) and a 6φ eyepiece, the aperture of the stage being arranged so as to contain the character "B" therewithin. In a case where printing was not completely contained within (i.e., protruded from) stage aperture, it was considered acceptable to change stage as necessary (e.g., 10φ, 30φ, etc.). Even where printing protruded therefrom, so long as a portion of printing was contained within stage aperture and light for measurement fell thereon, this was considered to be acceptable.

Furthermore, for the non-printed portion, a square sample which was 3 cm on a side was cut from the portion at which printing had not been carried out, and color L* values were measured using 6φ components at the stage and eyepiece of the color difference meter. It was considered acceptable to change the stage and/or eyepiece of the color difference meter to 10φ, 30φ, or the like as necessary, in which case it was considered acceptable to employ a sample size of arbitrary size so long as it was such as to cause the aperture of the stage to be covered (i.e., so long as it did not allow light for measurement to leak past it).

[Visual evaluation of printed portion]

Visual perceptibility of the characters "12345ABCDE" that were printed on the laminated body was judged based on the following criteria.

GOOD Characters were recognizable as a result of visual inspection
BAD Characters were unrecognizable as a result of visual inspection

In addition, whether there was deformation or perforation in the printed portion of the laminated body was judged based on the following criteria.

GOOD There was no deformation or perforation as a result of visual inspection
BAD There was deformation or perforation as a result of visual inspection

[Abrasion resistance of printed portion]

Using a simple abrasion resistance tester (Model IMC-1557, Imoto Machinery Co., LTD), the abrasion resistance of the printed portion was evaluated. A film including a printed portion was cut into a size of 150 mm × 150 mm to be used as a measurement sample. The cut film was set in an abrasion resistance tester so that the printed portion was in contact with steel wool, and the printed portion was rubbed with the steel wool 50 times at a reciprocating distance of 10 cm and a speed of 15 seconds/10 times. The yarn number of steel wool was #0000 and the weight was 1 kg.

The printed portion after being rubbed with steel wool was visually evaluated based on the following criteria.

GOOD Characters were recognizable as a result of visual inspection (characters were not defaced by rubbing)
BAD Characters were unrecognizable as a result of visual inspection (characters were defaced by rubbing)

[Table 3]

| | | Working Example 1 | Working Example 2 | Working Example 3 | Working Example 4 | Working Example 5 | Working Example 6 | Comparative Example 1 | Comparative Example 2 |
|---|---|---|---|---|---|---|---|---|---|
| Layer configuration | Substrate layer | - | Film 7 | - | Film 7 | Film 8 | Film 8 | Film 7 | - |
| | Gas barrier layer | - | $Al_2O_3$ | - | - | $Al_2O_3$/SiO2 | Al | - | - |
| | Adhesive layer | - | Urethane-based 3 $\mu$m | - | Urethane-based 3 $\mu$m | Urethane-based 3 $\mu$m | Urethane-based 3 $\mu$m | - | - |
| | Printing layer | Film 1 | Film 1 | Film 2 | Film 3 | Film 4 | Film 1 | - | Film 1 |
| | Adhesive layer | Urethane-based 3 $\mu$m | Urethane-based 3 $\mu$m | Urethane-based 3 $\mu$m | Urethane-based 3 $\mu$m | Urethane-based 3 $\mu$m | Urethane-based 3 $\mu$m | Urethane-based 3 $\mu$m | - |
| | Sealing layer | Film 5 | Film 6 | Film 5 | Film 5 | Film 5 | Film 6 | Film 5 | - |
| Thickness of laminated body [$\mu$m] | | 85 | 102 | 88 | 148 | 101 | 101 | 45 | 50 |
| Heat sealing strength [N/15 mm] | | 45 | 52 | 39 | 58 | 51 | 41 | 32 | 0 |
| Heat shrinkage rate [%] | Machine direction | 1.8 | 1.3 | 0.9 | 0.4 | 0.4 | 1.3 | 0.5 | 1.1 |
| | Width direction | 1.4 | 1.2 | 0.8 | 0.3 | 0.4 | 1.1 | 0.4 | 0.9 |
| Tensile fracture strength [MPa] | Machine direction | 54 | 220 | 62 | 250 | 201 | 260 | 218 | 50 |
| | Width direction | 158 | 234 | 147 | 267 | 228 | 278 | 234 | 163 |
| Gas barrier properties | Water vapor transmission rate (g/m2·d) | 6 | 1.5 | 6 | 6 | 1.3 | 0.5 | 38 | 8 |
| | Oxygen transmission rate (cc/m2·d·atm) | 407 | 1.2 | 401 | 9 | 0.9 | 0.5 | 98 | 421 |
| Laser irradiation condition | Laser source | UV | Fiber | UV | Fiber | Fiber | Fiber | UV | UV |
| | Pulse frequency [kHz] | 40 | 30 | 40 | 45 | 50 | 60 | 40 | 40 |
| | Scanning speed [mm/min.] | 2000 | 1500 | 2000 | 800 | 1500 | 2000 | 2000 | 2000 |
| | Output [%] | 30 | 80 | 30 | 30 | 30 | 30 | 30 | 30 |

(continued)

| | | Working Example 1 | Working Example 2 | Working Example 3 | Working Example 4 | Working Example 5 | Working Example 6 | Comparative Example 1 | Comparative Example 2 |
|---|---|---|---|---|---|---|---|---|---|
| Printing size | Height [mm] | 5 | 8 | 1 | 7 | 5.5 | 9 | - | 5 |
| | Width [mm] | 3 | 5 | 1 | 7 | 4.5 | 10 | - | 3 |
| Color L* value | Printed portion | 94 . 8 | 95.3 | 89.7 | 88.5 | 83.9 | 91.2 | - | 94.5 |
| | Non-printed portion | 97.1 | 96.4 | 97.5 | 95.3 | 92.4 | 94.2 | - | 97.2 |
| | Difference | 2.3 | 1.1 | 7.8 | 6.8 | 8.5 | 3 | - | 2.7 |
| Visual evaluation of printed portion | Visual perceptibility of printing | Good | Good | Good | Good | Good | Good | Bad | Good |
| | Presence or absence of deformation | Good | Good | Good | Good | Good | Good | Good | Bad |
| | Presence or absence of perforation | Good | Good | Good | Good | Good | Good | Good | Bad |
| Abrasion resistance of printed portion | | Good | Good | Good | Good | Good | Good | - | Good |

[Manufacturing conditions and evaluation results of film]

All of the laminate display bodies of Examples 1 to 6 were excellent in the physical properties listed in Table 3, gave favorable evaluation results, and could be preferably used as packaging including displays.

On the other hand, in Comparative Example 1, the laminate display body did not include a printing layer, thus printing by laser was not possible, and the laminate display body was not preferable as a laminate display body.

In Comparative Example 2, the laminate display body did not include a laser non-absorbing layer, so deformation and perforation were observed at the printed portion. In Comparative Example 2, the laminate display body also did not include a sealing layer, and thus was not able to satisfy the heat sealing properties required to be formed into a packaging.

INDUSTRIAL APPLICABILITY

The laminate display body of the present invention can provide a laminate display body which does not cause peeling off of the printing due to external stimuli such as rubbing and can afford clear printing. Thus, the laminate display body of the present invention can be suitably used for packaging including labels and lid materials.

**Claims**

1. A laminate display body comprising at least one printing layer that can undergo printing by laser irradiation, wherein the laser printing layer includes a laser-printed portion printed by laser and a non-printed portion, at least one laser non-absorbing layer is laminated on the printing layer, and an absolute value of a difference in color L* value between the laser-printed portion and the non-printed portion is 1.0 or more and 10.0 or less.

2. The laminate display body according to claim 1, wherein the printing layer contains single substances or compounds of one or more selected from the group consisting of bismuth, gadolinium, neodymium, titanium, antimony, tin, aluminum, calcium, and barium as a laser printing pigment.

3. The laminate display body according to claim 1 or 2, wherein the printing layer contains at least one of titanium oxide or calcium carbonate as a laser printing pigment.

4. The laminate display body according to any one of claims 1 to 3, wherein the laser non-absorbing layer is a sealing layer.

5. The laminate display body according to any one of claims 1 to 4, wherein a substrate layer is laminated as the laser non-absorbing layer.

6. The laminate display body according to any one of claims 1 to 5, wherein a gas barrier layer is further laminated.

7. The laminate display body according to any one of claims 1 to 6, wherein a thickness is 5 um or more and 200 um or less.

8. The laminate display body according to any one of claims 1 to 7, wherein a resin making up the printing layer is mainly any of polyester, polypropylene, or polyethylene.

9. The laminate display body according to any one of claims 1 to 8, wherein either a height or a width of printing size in the printed portion is 0.2 mm or more and 100 mm or less.

10. A packaging comprising the laminate display body according to any one of claims 1 to 9 at least at a part.

**EP 4 309 892 A1**

| INTERNATIONAL SEARCH REPORT | International application No. |
|---|---|
| | **PCT/JP2022/009486** |

**A. CLASSIFICATION OF SUBJECT MATTER**

*B32B 27/00*(2006.01)i; *B32B 27/20*(2006.01)i; *B32B 27/32*(2006.01)i; *B65D 65/40*(2006.01)i
FI: B32B27/00 B; B65D65/40 D; B65D65/40 A; B32B27/20 A; B32B27/32 Z

According to International Patent Classification (IPC) or to both national classification and IPC

**B. FIELDS SEARCHED**

Minimum documentation searched (classification system followed by classification symbols)

B32B1/00-43/00; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-172761 A (NIPPON CARBIDE KOGYO KK) 10 October 2019 (2019-10-10) claims, paragraphs [0017]-[0071] | 1-3, 5, 7-10 |
| Y | | 3, 4, 6 |
| X | JP 2010-274530 A (DAINIPPON PRINTING CO LTD) 09 December 2010 (2010-12-09) claims, paragraphs [0020]-[0085] | 1-10 |
| Y | | 3, 4, 6 |
| X | WO 2020/071490 A1 (DAINIPPON PRINTING CO LTD) 09 April 2020 (2020-04-09) claims, paragraphs [0010]-[0014], [0020]-[0076], [0091]-[0103], [0133]-[0155] | 1-10 |
| Y | | 3, 4, 6 |
| Y | JP 2002-309104 A (NIPPON KARARINGU KK) 23 October 2002 (2002-10-23) claims, paragraphs [0024]-[0036] | 3 |
| A | JP 2010-202749 A (MITSUBISHI PLASTICS INC) 16 September 2010 (2010-09-16) entire text | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 March 2022** | **12 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/009486** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2019-59070 A (DAINIPPON PRINTING CO LTD) 18 April 2019 (2019-04-18)<br>entire text | 1-10 |
| A | WO 2019/057645 A1 (TESA SE) 28 March 2019 (2019-03-28)<br>entire text | 1-10 |
| A | WO 2009/065630 A1 (TESA AG) 28 May 2009 (2009-05-28)<br>entire text | 1-10 |
| E, A | JP 2022-37277 A (SEED CO LTD) 09 March 2022 (2022-03-09)<br>entire text | 1-10 |

Form PCT/ISA/210 (second sheet) (January 2015)

<table>
<tr><th>INTERNATIONAL SEARCH REPORT<br>Information on patent family members</th><th colspan="2">International application No.<br>**PCT/JP2022/009486**</th></tr>
</table>

| Patent document<br>cited in search report | Publication date<br>(day/month/year) | Patent family member(s) | Publication date<br>(day/month/year) |
|---|---|---|---|
| JP 2019-172761 A | 10 October 2019 | (Family: none) | |
| JP 2010-274530 A | 09 December 2010 | (Family: none) | |
| WO 2020/071490 A1 | 09 April 2020 | JP 2021-12880 A | |
| JP 2002-309104 A | 23 October 2002 | (Family: none) | |
| JP 2010-202749 A | 16 September 2010 | (Family: none) | |
| JP 2019-59070 A | 18 April 2019 | (Family: none) | |
| WO 2019/057645 A1 | 28 March 2019 | EP 3684610 A1<br>DE 102017216789 A<br>CN 111107988 A | |
| WO 2009/065630 A1 | 28 May 2009 | DE 102007055356 A1 | |
| JP 2022-37277 A | 09 March 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002362027 A
- JP 2017209847 A
- JP 2014104735 A
- WO 2014188828 A